# EUROPÄISCHE PATENTSCHRIFT

(11) **EP 0 808 881 B1**
(45) Veröffentlichungstag und Bekanntmachung des Hinweises auf die Patenterteilung: **22.09.1999**
(21) Anmeldenummer: 97108387.8
(22) Anmeldetag: 23.05.1997
(51) Int. Cl.: C09D 5/03, C08G 18/61, C08G 18/46, C08G 18/40, C09D 175/04, C09D 7/12

(54) **Beschichtung aus einem Pulverlack mit Antihaft-Effekt und Verfahren zu seiner Herstellung**
Coating from a powder paint having an antisticking effect and process for its preparation
Revêtement à partir d'un vernis en poudre à effet antiadhésif et procédé de sa préparation

(30) Priorität: 23.05.1996 DE 19620890
(43) Veröffentlichungstag der Anmeldung: 26.11.1997
(73) Patentinhaber: EWALD DÖRKEN AG, 58313 Herdecke (DE)
(72) Erfinder: Stillert, Günther, 44379 Dortmund (DE); Singe, Thomas, Dr., 44287 Dortmund (DE)
(74) Vertreter: Kalkoff, Heinz-Dieter, Dipl.-Ing.

(56) Entgegenhaltungen:
- EP-A- 0 217 364
- EP-A- 0 342 826
- EP-A- 0 442 272

## Beschreibung

Die vorliegende Erfindung betrifft eine Beschichtung aus einem Pulverlack mit Antihaft-Effekt nach dem Oberbegriff von Anspruch 1 und ein Verfahren zu seiner Herstellung.

Pulverlackierungen und die entsprechenden Beschichtungsmaterialien sind nach dem Stand der Technik im breiten Umfang für unterschiedlichste Anwendungen bekannt. Es werden übliche Lackformulierungen, die Bindemittel, Pigmente, Füllstoffe und Additive beinhalten, eingesetzt. Übliche Bindemittelkombinationen sind
Epoxydharz/Härter-Pulver,
Polyester/Epoxy-Pulver,
Polyester/Glycidylhärter-Pulver,
Polyurethan-Pulver auf Basis Polyester/Isocyanat-Härter oder Acrylat/Härter-Pulver.

Eingesetzt werden derartige Lacke überwiegend auf metallischen Untergründen, aber auch auf Glas, Keramik sowie hitzebeständigen Kunststoffen. Die zugrundeliegenden Spezifikationen beinhalten dabei das breite Feld aller technischen Anwendungen, ebenso wie dekorative Anwendungen. Insbesondere dort, wo dekorative Anwendungen zum Tragen kommen, ist die Verschmutzung von Oberflächen für die Pflege beschichteter Oberflächen in der Praxis ein erhebliches Problem. Neben der normalen Verschmutzung durch übliche Luftinhaltsstoffe und Immissionen sind zunehmend Verschmutzungen durch Sprühdosen-Lacke, Bemalung mit Filzstiften etc., lästig und kostenintensiv in der Beseitigung, wenn überhaupt möglich.

Diese hartnäckigen Verschmutzungen durch lösungsmittelhaltige Lacke, Farbstoffe, Tinten etc. sollen hier nachstehend unter dem Stichwort Graffiti zusammengefaßt werden.

Da die Lackierung eines Objektes insbesondere hervorragende Haftung zum Untergrund notwendig macht, zeichnen sich alle Beschichtungen, ebenso die eingesetzten Pulverlacke, durch hervorragende Haftung auf dem Untergrund aus. Die sog. Isotropie von Lackfilmen bedeutet gleichzeitig, daß nicht nur auf der Unterseite, sondern auch auf der Oberfläche, besonders dann, wenn mit lösemittelhaltigen Lacken, Filzstiften etc., der bereits vernetzte Pulverlackfilm beaufschlagt wird, eine starke Haftung vorhanden ist. Diese Forderung führt dazu, daß Graffiti-Verschmutzungen nur mit erheblichem Aufwand von der Oberfläche pulverlackierter Teile zu entfernen sind, wenn sie überhaupt entfernt werden können.

Aus der Anwendung von flüssig aufgebrachten, häufig lösemittelhaltigen, Bautenlacken ist bekannt, Oberflächen von Gebäuden, Brücken etc. mit einer Beschichtung zu versehen, die nach dem Verunreinigen mit Graffiti dadurch eine Reinigung zuläßt, daß das Graffiti mit der sogenannten Anti-Graffiti-Beschichtung komplett vom Bauwerk wieder entfernt wird.

Andere lösungsmittelhaltige Beschichtungsmaterialien auf Basis von Polyester/Polyisocyanat/Lösemittel /Lösemittel sind beispielsweise aus der EP 0 442 272 A2 bekannt. Hier wird eine Beschichtung mit Hilfe von in Lösemitteln gelösten Additiven mit einem Antihafteffekt ausgestattet, der das Entfernen von Verunreinigungen von der Oberfläche erlaubt. In einem Aushärtungsprozeß werden die Additive hier mit in der Beschichtung eingebunden. Nachteilig ist hierbei die Verwendung von Lösemitteln vorallem aufgrund der damit verbundenen erheblichen Umweltbelastung, die bei der Verwendung von Pulverlacken als Beschichtungsmaterial nicht gegeben ist.

Bei hochwertigen Wirtschaftsgütern, die eine Pulverbeschichtung tragen, verbietet sich zum einen die Vorgehensweise des Aufbringens einer Beschichtung, die bei der Reinigung abgelöst wird, da die Pulverbeschichtung im Vorfeld der Montage der Wirtschaftsgüter aufgebracht wird. Zum anderen bietet eine solche Pulverbeschichtung aber alle Vorteile einer emissionsarmen Beschichtung, verbunden mit hervorragenden technologischen Eigenschaften. Ein pulverbeschichtetes Objekt, das mit Graffiti verunreinigt ist, ist jedoch im Normalfall nicht mehr zu reinigen. Es muß ersetzt werden.

Aus der EP-A-0 217 364 sind Lacke und Formmassen mit einem Gehalt an Polysiloxanen als Antihaftadditive bekannt. Die dort beschriebenen Polysiloxane sind jedoch insoweit bei Pulverlakken nur begrenzt einsetzbar, daß sie es nicht gestatten, sowohl eine Vernetzung mit bekannten Bindemittel/Härter-Kombinationen als auch eine ausreichende Diffusion in eine Oberflächenschicht bei Pulverlacken zu gewährleisten. Auf speziell bei Pulverlacken einsetzbare Polysiloxane wird nicht eingegangen.

Der Erfindung liegt die Aufgabe zugrunde, eine Pulverbeschichtung zu entwickeln, die einen Antihafteffekt für Graffiti bereits in sich trägt, ohne daß die bekannten Eigenschaften der Pulverlackierung beeinträchtigt sind. Es ist somit ein Film zu schaffen, der einerseits die Haftung auf dem Untergrund gewährleistet, andererseits einen dauerhaften Antihaft-effekt aufweist, der keine negativen Auswirkungen auf andere Spezifikationspunkte beinhaltet.

Erfindungsgemäß wird die Aufgabe dadurch gelöst, daß als Antihaftadditiv ein Polysiloxan mit funktionellen Gruppen und einer Schmelztemperatur im Bereich von 40 bis 80°C eingesetzt wird.

Damit bilden Bindemittel/Härter-Kombinationen handelsüblicher Rezeptur den Ausgangspunkt zur Herstellung eines Lackes mit Anti-Hafteffekt. Diese Basis ist von ihren Eigenschaften und den Herstellverfahren ausreichend bekannt und vorteilhafterweise stellt die Erfindung hier eine prozeßtechnisch leicht in den Fertigungsablauf integrierbare Erweiterung der gewohnten Produktion dar. Als Additive kommen erfindungsgemäß Polysiloxanverbindungen in Betracht. Durch diese Lackierung wird eine Oberfläche erzeugt, die mit einem oder auch mehreren der genannten Antihaftadditive angereichtert ist und somit die gewünschte Antihaftwirkung aufweist, ohne daß die bekannten Eigenschaften der Pulverlackbeschichtung beeinträchtigt werden.

Erfindungsgemäß wird das Anithaftadditiv fest in den Lackfilm eingebunden ist, um eine langfristige Antihaftwirkung selbst unter ungünstigen Bedingungen zu erreichen. Das ist beispielsweise bei der Witterung und zusätzlichen Verschmutzungen ausgesetzten dekorativen Oberflächen der Fall. Diese können unter Verwendung eines erfindungsgemäßen Pulverlackes auch häufig bei vergleichsweise geringem Aufwand gereinigt werden, ohne daß die Beschichtung erneuert werden oder das betreffende Teil ausgewechselt werden muß.

Der erfindungsgemäße Pulverlack besitzt die Eigenschaft, daß das verwendete Antihaft-Additiv im Laufe des Beschichtungsprozesses überwiegend an die Oberfläche diffundiert. Somit befindet sich das Antihaft-Additiv zu einem großen Teil genau dort, wo es aufgrund seiner Eigenschaften benötigt wird.

Es sind Additive bekannt, die im Pulverlackfilm bei der Applikation und dem Einbrennen an die Oberfläche diffundieren. Diese haben jedoch üblicherweise den Nachteil, daß sie zu Beeinträchtigungen der Oberfläche führen oder daß sie nach einiger Zeit aus der Oberfläche ausgewaschen werden, da sie nicht hierin fixiert sind. Damit verschwindet dann auch der Antihaft-Effekt einer derartigen Beschichtung. Durch das Vernetzen bzw. Einbinden der Additive wird dieser Vorgang der Auswaschung in einem erfindungsgemäßen Lack unterbunden, die Beschichtung behält somit ihre Eigenschaften dauerhaft. Das Antihaft-Additiv wird also an der Oberfläche der Beschichtung fest in den Lackfilm eingebunden und steht somit auch bei vergleichsweise geringer Dosierung in ausreichender Menge dauerhaft zur Verfügung.

Vorzugsweise werden die Antihaftadditive mit chemisch reaktiven Gruppen unter der Verwendung einer speziellen Fertigungstechnik, der Masterbatch-Technik, im Pulverlack eingebracht. Sie können so bei der Applikation und dem Einbrennen in der Verflüssigungsphase des Films an die Oberfläche diffundieren und bei weiterem Fortschreiten des Einbrennprozesses in dem Vernetzungsmechanismus durch chemische Reaktionen integriert werden.

Als Basisbindemittel können vorteilhafterweise alle bekannten Pulverlackbindemittel verwendet werden, die mit den zugehörigen Härtern einen vernetzten Film bilden können. Vorzugsweise werden OH-gruppenhaltige Polyester verwendet, die mit Isocyanat-Gruppen-haltigen Polymeren gehärtet werden. Pulverlacke auf dieser chemischen Basis sind als Polyurethan-Pulverlacke bekannt und z.B. in DE 44 06 157 beschrieben.

Als Additiv werden erfindungsgemäß Antihaftadditive verwendet, die chemische Funktionalität wie Epoxy-, Carboxyl- oder Hydroxyl-Gruppen tragen und deren Funktionalität auf die der verwendeten Bindemittel/Härter-Systeme abgestimmt ist. Für die Verwendung in den vorzugsweise eingesetzten Polyurethan-Pulverlacken tragen diese Antihaft-Additive vorzugsweise OH-Funktionalität. Das Ergebnis ist ein Pulverlack mit Antihafteffekten bzw. Anti-Graffiti-Eigenschaft, der nach bekannten Verfahren hergestellt und verarbeitet werden kann.

Vor allem zeichnen sich Polyurethansysteme besonders durch günstige Einbrennbedingungen, gute Überbrennbarkeit, hohe Wetter- und UV-Stabilität und große Flexibilitätsreserve aus. In einer bevorzugten Ausführungsform wird die Kombination aus hydroxyfunktionellem Polyester und blockiertem Isocyanat-Polymer verwendet.

Als Basispolyester werden Polyester verwendet mit Hydroxylzahlen von 30 bis 150, vorzugsweise 40 bis 100. Die Säurezahlen liegen bei max. 15, vorzugsweise max. 10. Als Vernetzer werden blockierte Isocyanat-Polymere eingesetzt, vorzugsweise solche auf Basis Isophorondiisocyanat-Addukt mit Gehalten an Verkapptem NCO von 5 bis 40 Gew.-%, vorzugsweise 10 bis 20 Gew.-%. Als Verkappungsmittel dient vorzugsweise Epsilon-Caprolactam. Die Aufspalttemperatur liegt zwischen 120 und 175° C, vorzugsweise zwischen 140 und 170°C. Der Schmelzbereich liegt zwischen 70 und 100°C, vorzugsweise zwischen 80 und 90°C. Das Verhältnis Polyester:Isocyanat liegt zwischen 95:5 und 50:50, vorzugsweise zwischen 92:8 und 60:40. Der Gehalt an freiem Isocyanat liegt unter 2 %, vorzugsweise unter 1 %.

Als Antihaftadditiv wird ein Polydimethylsiloxan verwendet, das funktionelle Gruppen trägt, für den Einsatz in Polyurethan-Pulverlacken vorzugsweise ein polyestermodifiziertes hydroxylfunktionales Polydimethylsiloxan. Dieses Additiv hat eine OH-Zahl zwischen 20 und 120, vorzugsweise zwischen 30 und 50. Der Schmelzpunkt liegt zwischen 40 und 80, vorzugsweise zwischen 50 und 60°C.

Auf Grund der OH-Funktionalität zur chemischen Einbindung in den Vernetzungsprozeß ist die chemische Struktur des Additives so geschaffen, daß Schmelzpunkte im o.g. Bereich vorliegen. Eine direkte Einarbeitung in dem Pulverlack verbietet sich, da die Extrusionstemperaturen über dem Schmelzpunkt liegen. Daher wird das Additiv auf mit Hilfe der an sich bekannten Masterbatch-Technologie in Bindemittel vordispergiert, um eine Einarbeitung in den Pulverlack zu ermöglichen. Von dem Antihaft-additiv werden Mengen von 0,5 bis 10 %, vorzugsweise 2 bis 4 % verwendet.

Weitere bevorzugte Ausführungsformen können den Ansprüchen entnommen werden.

Die Basisrezeptur des Polyurethans wird im jeweiligen Anwendungsfall nach den Forderungen der technologischen Eigenschaften festgelegt. Die durch das Additiv eingebrachte Menge von OH-Gruppen wird auf die OH-Gruppen des Polyesters aufgerechnet und in die Stöchiometrie miteingebracht, die der Vernetzung mit Isocyanat zugrunde liegt. Hierbei werden die üblichen Vernetzungen je nach Anforderungen an die Pulverlackfilme verwendet, d.h. stöchiometrische Vernetzung, Übervernetzung bei Beschleunigung der Reaktion, Untervernetzung bei Erhöhung der Flexibilität und Füllung des Filmes. Eine entsprechende Beispielrezeptur befindet sich im Beispiel 1.

Der Ablauf der Beschichtung ist wie folgt zu charakterisieren: Die geschilderte Rezeptur wird bei üblichen Extrusionsbedingungen zum Pulverlack extrudiert, vermahlen und mit üblichen Applikationshilfsmitteln appliziert und eingebrannt. Zur Darstellung des Antihafteffektes wurden die eingebrannten Lackfilme mit einer standardisierten Testmethode einem Reinigungsprozeß unterworfen.

| **Beispiel 1** Polyurethan-Pulverlack mit Anti-Graffiti-Effekt | |
|---|---|
| 30,0 Gew.-% | Polyester-Harz, Hydroxylzahl 85 |
| 18,0 Gew.-% | Blockiertes IPDI-Addukt 15 Gew.-% NCO blockiert |
| 0,9 Gew.-% | Antikrater- und Verlaufsadditiv Polyacrylat, adsorbiert an Siliziumdioxid |
| 15,0 Gew.-% | Masterbatch s.u. |
| 0,5 Gew.-% | Benzoin |
| 25,0 Gew.-% | Pigment TiO₂ Typ Rutil, Chlorid |
| 10,6 Gew.-% | Füllstoff Bariumsulfat mittlerer Teilchendurchmesser 1 Mikrometer |
| | |

| Masterbatch | |
|---|---|
| 80,0 Gew.-% | Polyester-Harz s.o. |
| 20,0 Gew.-% | Polyester modifiziertes hydroxyfunktionelles Polydimethylsiloxan, Hydroxylzahl ca. 40 |

Die Ergebnisse für die Prüfung des Antihafteffektes sind in der nachfolgenden Tabelle für übliche Pulverlackbindemittel, einem normal handelsüblichen Polyurethanpulverlack und einem erfindungsgemäßen Polyurethanpulverlack zusammengestellt.

Die Versuchsdurchführung erfolgte durch Beaufschlagung mit 2 kg Gewicht, Fläche ca. 30 cm², befeuchteter Zellstoff. Reiben mit 10 g eines handelsüblichen tensidhaltigen Reinigungsmittels.

Die Zählung der Hübe erfolgt als Einzelhub.

| Pulverlacksystem | Einzelhübe |
|---|---|
| Polyester/Primid | 20 (schlechte Reinigung) |
| Polyester/Glycidyl-Sauerstoff-Verb. | 20 (schlechte Reinigung) |
| Polyurethan | 20 (schlechte Reinigung) |
| Polyurethan Antihafteffekt (Bsp. 1) | 5 (gute Reinigung) |

Aus dieser Tabelle ist das hervorragende Ergebnis eines erfindungsgemäßen Pulverlackes in seiner Anwendung als Pulverlackfilm zu erkennen.

Ein erfindungsgemäßer Pulverlack wird insbesondere dort vorteilhaft verwendet, wo an dekorativen Oberflächen Pulver-Decklacke oder Pulver-Einschichtlacke zum Einsatz kommen. In Form einer Pulverlack-Beschichtung werden damit erstmals witterungsbeständige Beschichtungen mit Anti-Graffiti-Eigenschaft realisierbar. Dabei finden vorteilhafterweise Pulverlacke gängiger Rezeptur Anwendung, die üblicherweise für Grundierungen oder Einschichtanwendungen eingesetzt werden, bei denen andere technologische Werte im Vordergrund stehen als die Witterungsbeständigkeit. Diese Lacke werden in ihrer Zusammensetzung erfindungsgemäß geändert und so in ihren Eigenschaften erweitert, ohne daß sie ihre bisherigen Vorzüge verlieren.

## Patentansprüche

1. Pulverlack-Lackierung mit Anti-Hafteffekt, die aus einem Pulverlack einer handelsüblichen Bindemittel/Härter-Kombination gebildet ist und ein Antihaftadditiv enthält, das bei einem Beschichtungsvorgang fest in die Bindemittel/Härter-Kombination eingebunden wird, **dadurch gekennzeichnet,** daß
- als Antihaftadditiv ein Polysiloxan mit funktionellen Gruppen und einer Schmelztemperatur im Bereich von 40 bis 80°C verwendet wird.

2. Pulverlack nach dem Anspruch 1, dadurch **gekennzeichnet,** daß das verwendete Antihaft-Additiv freie Hydroxylgruppen trägt.

3. Pulverlack nach den Ansprüchen 1 bis 2, dadurch **gekennzeichnet,** daß als Antihaftadditiv ein Polyester-modifiziertes Dimethyl-Polysiloxan verwendet wird.

4. Pulverlack nach den Ansprüchen 1 bis 3, dadurch **gekennzeichnet,** daß das Antihaftadditiv eine Hydroxylzahl von 20 bis 120, insbesondere von 30 bis 50 aufweist.

5. Pulverlack nach den Ansprüchen 1 bis 4, dadurch **gekennzeichnet,** daß das Antihaftadditiv in einer Menge von 0,5 bis 10 Gew.- %, insbesondere in einer Menge von 2 bis 4 Gew.- % verwendet wird.

6. Pulverlack nach den Ansprüchen 1 bis 5, dadurch **gekennzeichnet,** daß als Bindemittel/Härter die Kombination Bindemittel hydroxylgruppenhaltig/Isocyanat-Polymer in blockierter Form verwendet wird.

7. Pulverlack nach den Ansprüchen 1 bis 6, dadurch **gekennzeichnet,** daß als Bindemittel ein hydroxylgruppenhaltiger Polyester verwendet wird.

8. Pulverlack nach den Ansprüchen 1 bis 7, dadurch **gekennzeichnet,** daß der verwendete Polyester eine Hydroxylzahl von 30 bis 150, insbesondere von 40 bis 100 aufweist.

9. Pulverlack nach den Ansprüchen 6 bis 8, dadurch **gekennzeichnet,** daß als Isocyanat-Polymer ein blockiertes Isophorondiisocyanat-Addukt verwendet wird.

10. Pulverlack nach dem Anspruch 9, dadurch **gekennzeichnet,** daß das blockierte Isocyanat-Polymer einen NCO-Gehalt in blockierter Form von 5 bis 40 Gew.-%, insbesondere von 10 bis 20 Gew.-% aufweist.

11. Pulverlack nach den Ansprüchen 7 bis 10, dadurch **gekennzeichnet,** daß das Verhältnis Polyester:Isocyanat zwischen 95:5 und 50:50, insbesondere zwischen 92:8 und 60:40 liegt.

12. Pulverlack nach den Ansprüchen 9 bis 11, dadurch **gekennzeichnet,** daß das blockierte Isocyanat-Polymer eine Deblockierungstemperatur von 120 bis 175°C, insbesondere von 140 bis 170°C aufweist.

13. Pulverlack nach den Ansprüchen 1 bis 12, dadurch **gekennzeichnet,** daß das Antihaftadditiv als Masterbatch im Polyester eingebracht wird.

14. Pulverlack nach den Ansprüchen 1 bis 13, dadurch **gekennzeichnet,** daß das Antihaftadditiv im Masterbatch in einer Konzentration von 5 bis 35 Gew.-%, vorzugsweise in einer Konzentration von 15 bis 25 Gew.-% eingebracht wird.

15. Pulverlack nach den Ansprüchen 1 bis 14, dadurch **gekennzeichnet,** daß zusätzliche Verlaufs- und /oder Beschleunigungsadditive verwendet werden.

16. Pulverlack nach den Ansprüchen 1 bis 15, dadurch **gekennzeichnet,** daß zusätzliche Pigmente und/oder Füllstoffe verwendet werden.

17. Pulverlack nach den Ansprüchen 1 bis 16, dadurch **gekennzeichnet,** daß matte Systeme durch Verwendung der Zweikomponenten-Technologie und dem Einsatz unterschiedlich reaktiver Bindemittel erzielt werden.

18. Verfahren zur Herstellung eines Pulverlackes mit Anti-Hafteffekt, bei dem der Pulverlack aus einer handelsüblichen Bindemittel/Härter-Kombination gebildet wird, bei deren Herstellung ein Antihaftadditiv zugegeben wird, das bei einem Beschichtigungsvorgang fest in die Bindemittel/Härter-Kombination eingebunden wird, dadurch **gekennzeichnet,** daß bei der Herstellung als Antihaftadditiv ein Polysiloxan mit funktionellen Gruppen und einer Schmelztemperatur im Bereich von 40 bis 80°C eingesetzt wird.

19. Verfahren nach Anspruch 18, dadurch **gekennzeichnet,** daß ein Antihaftadditiv als Masterbatch in ein Polyester in einer Konzentration von 5 bis 35 Gew.-% eingebracht wird, vorzugsweise in einer Konzentration von 15 bis 25 Gew.-%.

## Claims

1. Powder coating with anti-adhesive effect which is formed from a powder coating material comprising a commercially customary binder/curing agent combination and comprises an anti-adhesion additive which is incorporated securely into the binder/curing agent combination in the course of a coating operation, characterized in that
- a polysiloxane having functional groups and a melting point in the range from 40 to 80°C is used as anti-adhesion additive.

2. Powder coating material according to Claim 1, characterized in that the anti-adhesion additive used carries free hydroxyl groups.

3. Powder coating material according to Claim 1 or 2, characterized in that a polyester-modified dimethylpolysiloxane is used as anti-adhesion additive.

4. Powder coating material according to Claims 1 to 3, characterized in that the anti-adhesion additive has a hydroxyl number of from 20 to 120, in particular from 30 to 50.

5. Powder coating material according to Claims 1 to 4, characterized in that the anti-adhesion additive is used in an amount of from 0.5 to 10% by weight, in particular in an amount of from 2 to 4% by weight.

6. Powder coating material according to Claims 1 to 5, characterized in that the binder/curing agent combination used is that of hydroxyl-containing binder/isocyanate polymer is blocked form.

7. Powder coating material according to Claims 1 to 6, characterized in that a hydroxyl-containing polyester is used as binder.

8. Powder coating material according to Claims 1 to 7, characterized in that the polyester used has a hydroxyl number of from 30 to 150, in particular from 40 to 100.

9. Powder coating material according to Claims 6 to 8, characterized in that a blocked isophorone diisocyanate adduct is used as isocyanate polymer.

10. Powder coating material according to Claim 9, characterized in that the blocked isocyanate polymer has an NCO content in blocked form of from 5 to 40% by weight, in particular from 10 to 20% by weight.

11. Powder coating material according to Claims 7 to 10, characterized in that the polyester:isocyanate ratio lies between 95:5 and 50:50, in particular between 92:8 and 60:40.

12. Powder coating material according to Claims 9 to 11, characterized in that the blocked isocyanate polymer has a deblocking temperature of from 120 to 175°C, in particular from 140 to 170°C.

13. Powder coating material according to Claims 1 to 12, characterized in that the anti-adhesion additive is introduced as a masterbatch in the polyester.

14. Powder coating material according to Claims 1 to 13, characterized in that the anti-adhesion additive is introduced in the masterbatch in a concentration of from 5 to 35% by weight, preferably in a concentration of from 15 to 25% by weight.

15. Powder coating material according to Claims 1 to 14, characterized in that additional levelling and/or accelerating additives are used.

16. Powder coating material according to Claims 1 to 15, characterized in that additional pigments and/or fillers are used.

17. Powder coating material according to Claims 1 to 16, characterized in that matt systems are obtained by using the two-component technology and by using binders of different reactivity.

18. Process for preparing a powder coating material with anti-adhesive effect, in which the powder coating material is formed from a commercially customary binder/curing agent combination in whose preparation an anti-adhesion additive is added which is incorporated securely into the binder/curing agent combination in the course of a coating operation, characterized in that in the course of the preparation a polysiloxane having functional groups and a melting point in the range from 40 to 80°C is employed as anti-adhesion additive.

19. Process according to Claim 18, characterized in that an anti-adhesion additive is introduced as a masterbatch into a polyester in a concentration of from 5 to 35% by weight, preferably in a concentration of from 15 to 25% by weight.

## Revendications

1. Lacquage avec laque en poudre avec effet antiadhérent qui est formé par une laque en poudre d'une combinaison usuelle dans le commerce d'un liant et d'un durcisseur et qui contient un additif antiadhérent qui est incorporé de manière stable à la combinaison liant/durcisseur lors d'une opération de revêtement,
caractérisé en ce
qu'un polysiloxane avec des groupes fonctionnels et une température de fusion de l'ordre de 40 à 80° C est utilisé comme additif antiadhérent.

2. Laque en poudre selon la revendication 1, caractérisée en ce que l'additif antiadhérent utilisé porte des hydroxyles libres.

3. Laque en poudre selon les revendications 1 à 2, caractérisée en ce qu'un diméthyl-polysiloxane modifié par polyester est utilisé comme additif antiadhérent.

4. Laque en poudre selon les revendications 1 à 3, caractérisée en ce que l'additif antiadhérent présente un indice d'hydroxyle de 20 à 120, en particulier de 30 à 30.

5. Laque en poudre selon les revendications 1 à 4, caractérisée en ce que l'additif antiadhérent est utilisé dans une quantité de 0,5 à 10 % en poids, en particulier dans une quantité de 2 à 4 % en poids.

6. Laque en poudre selon les revendications 1 à 5, caractérisée en ce que la combinaison liant contenant des hydroxales/polymère d'isocyanate est utilisée en forme bloquée comme liant/durcisseur.

7. Laque en poudre selon les revendications 1 à 6, caractérisée en ce qu'un polyester contenant des hydroxyles est utilisé comme liant.

8. Laque en poudre selon les revendications 1 à 7, caractérisée en ce que le polyester utilisé présente un indice d'hydroxyle de 30 à 50, en particulier de 40 à 100.

9. Laque en poudre selon les revendications 6 à 8, caractérisée en ce qu'un produit d'addition d'isophorondiisocyanate bloqué est utilisé comme polymère d'isocyanate.

10. Laque en poudre selon la revendication 9, caractérisée en ce que le polymère d'isocyanate bloqué présente une teneur en NCO de forme bloquée de 5 à 10 % en poids, en particulier de 10 à 20 % en poids.

11. Laque en poudre selon les revendications 7 à 10, caractérisée en ce que le rapport polyester/isocyanate est situé entre 95/5 et 50/50, en particulier entre 92/8 et 60/40.

12. Laque en poudre selon les revendications 9 à 11, caractérisée en ce que le polymère d'isocyanate bloqué présente une température de déblocage de 120 à 175° C, en particulier de 140 à 170° C.

13. Laque en poudre selon les revendications 1 à 12, caractérisée en ce que l'additif antiadhérent est incorporé comme mélange maître dans le polyester.

14. Laque en poudre selon les revendications 1 à 13, caractérisée en ce que l'additif antiadhérent dans le mélange maître est incorporé dans une concentration de 5 à 35 % en poids, de préférence dans une concentration de 15 à 25 %.

15. Laque en poudre selon les revendications 1 à 14, caractérisée en ce que des additifs d'écoulement et/ou d'accélération supplémentaires sont utlisés.

16. Laque en poudre selon les revendications 1 à 15, caractérisée en ce qu des pigments et/ou des matières de remplissage supplémentaires sont utilisés.

17. Laque en poudre selon les revendications 1 à 16, caractérisée en ce que l'on obtient des systèmes mats par l'utilisation de la technologie à deux composants et l'utilisation de liants réactifs de manière différente.

18. Procédé pour la fabrication d'une laque en poudre avec effet antiadhérent, pour laquelle la laque en poudre est formée par une combinaison usuelle dans le commerce de liant et de durcisseur, lors de la fabrication de laquelle un additif antiadhérent est ajouté qui est incorporé de manière stable à la combinaison liant/durcisseur lors d'une opération de revêtement,
caractérisé en ce
que, lors de la fabrication en tant qu'additif antiadhérent, un polysiloxane avec des groupes fonctionnels et une température de fusion de l'ordre de 40 à 80° C est utilisé.

19. Procédé selon la revendication 18, caractérisé en ce qu'un additif antiadhérent est incorporé comme mélange maître dans un polyester dans une concentration de 5 à 35 % en poids, de préférence dans une concentration de 15 à 25 % en poids.
